# EUROPÄISCHE PATENTSCHRIFT

(11) **EP 2 769 938 B1**
(45) Veröffentlichungstag und Bekanntmachung des Hinweises auf die Patenterteilung: **10.02.2016**
(21) Anmeldenummer: 13000899.8
(22) Anmeldetag: 22.02.2013
(51) Int. Cl.: B65G 23/06, E01C 19/48, B65G 21/10

(54) **Antriebswellenmodul für eine Baumaschine**
Drive shaft module for a construction machine
Module d'arbre d'entraînement pour un engin

(43) Veröffentlichungstag der Anmeldung: 27.08.2014
(73) Patentinhaber: Joseph Vögele AG, 67067 Ludwigshafen (DE)
(72) Erfinder: Braun, Arthur, 67146 Deidesheim (DE)
(74) Vertreter: Grünecker Patent- und Rechtsanwälte PartG mbB

(56) Entgegenhaltungen:
- DE-A1-102006 016 099
- DE-U1- 29 915 798
- US-B1- 6 227 354

## Beschreibung

Die Erfindung betrifft ein Antriebswellenmodul gemäß dem Oberbegriff des Anspruchs 1 sowie ein Materialfördersystem und eine Baumaschine, in der dieses eingesetzt wird.

Aus dem Bergbau sind z.B. aus der US 6 227 354 B1 Antriebswellen für Kratzkettenförderer bekannt, die an beiden Enden durch Lagergehäuse gelagert werden. Beide Lagergehäuse verfügen über Tragarme, die an entsprechenden Strukturen eines Kratzkettenförderers befestigt werden. Die in der US 6 227 354 B1 offenbarte Anordnung kann als Einheit in Laufrichtung des Kratzkettenförderers aus ihrer Befestigung gelöst werden. Dazu müssen jedoch beide Tragarme demontiert werden, was Raum zur Vereinfachung des Demontageprozesses lässt.

US 6 227 354 B1 offenbart ein Antriebswellenmodul nach dem Oberbegriff des Anspruchs 1.

Antriebswellen werden in Materialfördersystemen von Baumaschinen zur Kraft- und Momentenübertragung eingesetzt. Bei konventionellen Wellen sind Krafteinleitungs- und Lagerelemente, wie z. B. Zahnräder, Riemenscheiben, Leit- oder Wälzlager, mit Hilfe von unterschiedlichen Welle-Näbe-Verbindungen an der Welle befestigt. Dazu gehören beispielsweise Keilwellenverzahnungen, Presssitze oder aber Nut- und Federverbindungen. Diese Welle-Nabe-Verbindungen verursachen einen hohen Fertigungs- und Montageaufwand. Auch bei Reparaturen verursacht diese konventionelle Konfiguration einen hohen Austauschaufwand. Darüber hinaus lässt sich eine gewisse Relativbewegung zwischen Welle und Nabe nie völlig vermeiden, was sich nachteilig auf den Verschleiß der Welle auswirkt.

Es sind, beispielsweise aus DE 10 2006 016 099 A1, Getriebewellen bekannt, bei denen Verzahnungen nicht mit Hilfe von Welle-Nabe-Verbindungen aufgebracht werden, sondern als Wellenabschnitte, die mit weiteren Wellenabschnitten axial durch Reibschweißen verbunden werden. Diese Konfiguration vereinfacht zwar die Montage und Fertigung der Welle selbst, nicht jedoch den Einbau- bzw. Austauschaufwand.

Aufgabe der Erfindung ist es daher, ein Antriebswellenmodul zu schaffen, das mit Hilfe von konstruktiv möglichst einfachen Mitteln sowohl den Fertigungs- und Montageaufwand als auch den Einbau- und Austauschaufwand reduziert.

Diese Aufgabe wird gelöst mit den Merkmalen des Anspruchs 1. Vorteilhafte Weiterbildungen sind in den Unteransprüche gegeben.

Das erfindungsgemäße Antriebswellenmodul zeichnet sich dadurch aus, dass eine darin enthaltene Antriebswelle verschiedene Segmente umfasst, die durch Reibschweißen zusammen gefügt sind. Darüber hinaus ist nur eine Halterung mit einem Lagerarm vorgesehen, die derart mit der Antriebswelle verbunden ist, dass das gesamte Antriebswellenmodul als Ganzes vormontiert in oder an der Baumaschine lösbar befestigbar ist. Der Vorteil dieser Konfiguration ist, dass das Antriebswellenmodul vollständig montiert werden kann, sodass es danach nur noch in eine aufnehmende Baumaschine bzw. ein aufnehmendes Materialfördersystem eingesetzt und mittels der Halterung befestigt werden muss. Dies stellt eine erhebliche Reduzierung des Einbauaufwandes gegenüber dem Stand der Technik dar. Die Fertigung der Antriebswelle aus mehreren, mittels Reibschweißen zusammengefügten Segmenten bietet gleich mehrere Vorteile. Einerseits wird durch die feste Verbindung die oben beschriebene Ausführung des Antriebswellenmoduls erst ermöglicht. Andererseits reduziert sich auch der Fertigungsaufwand für die Antriebswelle selbst. Da die verschiedenen Wellensegmente durch Reibschweißen miteinander verbunden werden, sind keine aufwendigen Welle-Nabe-Verbindungen, wie z. B. Keilwellen, Presssitze oder aber Nut- und Federverbindungen, mehr nötig. Durch das Fügen mittels Reibschweißen ist es zusätzlich denkbar, dass die einzelnen Segmente aus unterschiedlichen Werkstoffen gefertigt sind. Diese können auf die Funktion des jeweiligen Segments hin optimiert sein und sich hinsichtlich Härte, Oberflächenhärte, Dichte, Gewicht, Kosten oder aber Korrosions- und Oxidationsneigung unterscheiden.

Besonders günstig ist es, wenn das Antriebswellenmodul zusätzlich zu der Halterung oder den Halterungen eine Vorrichtung umfasst, die für eine Steckverbindung des Antriebswellenmoduls mit einer entsprechenden Einrichtung der Baumaschinen konfiguriert ist. So kann die Montage weiter vereinfacht werden.

Es hat sich als vorteilhaft erwiesen, wenn die Antriebswelle als Hohlwelle ausgeführt ist. So kann das Zusammenfügen mittels Reibschweißen erleichtert werden. Außerdem kann auf diese Weise Gewicht eingespart werden.

Besonders günstig ist es, wenn innerhalb der als Hohlwelle ausgeführten Antriebswelle eine Schmiereinrichtung vorgesehen ist. Die Verteilung des Schmiermittels kann dadurch erleichtert und durch die Rotation der Antriebswelle unterstützt werden. Bei Verwendung eines flüssigen Schmiermittels kann zusätzlich vorgesehen werden, dass eventuelle Abrasionsprodukte aus dem Bereich des Antriebswellenmoduls gespült werden.

Zweckmäßig kann es sein, dass die als Hohlwelle ausgeführte Antriebswelle mit Schmiermittel gefüllt ist. Dies stellt eine besonders einfach zu realisierende Variante einer Schmierung dar.

Die Erfindung bezieht sich auch auf ein Materialfördersystem für eine Schüttgut verarbeitende oder transportierende Baumaschine. Ein solches Materialfördersystem umfasst eine Fördereinrichtung oder mehrere Fördereinrichtungen, die zur Förderung des Schüttguts konfiguriert sind, sowie ein oder mehrere Antriebswellenmodule der vorstehend beschriebenen Art, das/die zum Antreiben der Fördereinrichtung oder der Fördereinrichtungen konfiguriert ist/sind. Die Verwendung eines solchen Antriebswellenmoduls bietet den Vorteil, dass sowohl beim Einbau, als auch bei Reparaturen oder Wartungen der Montageaufwand reduziert wird. Dadurch können die Stillstandzeiten des Materialfördersystems bzw. der Baumaschine minimiert werden.

Es hat sich als zweckmäßig erwiesen, dass das Antriebswellenmodul oder die Antriebswellenmodule unter einem Winkel, vorzugsweise orthogonal zur Förderrichtung der jeweiligen Fördereinrichtung entnehmbar ist/sind.

Sind mehrere Fördereinrichtungen vorgesehen, ist es besonders vorteilhaft, wenn die Antriebswellenmodule jeweils in eine Entnahmerichtung entnehmbar sind und die Entnahmerichtung des jeweiligen Antriebswellenmoduls einer Fördereinrichtung jeweils in eine einer anderen Fördereinrichtung abgewandte Richtung weist. Dies vereinfacht z. B. bei eng parallel nebeneinander laufenden Kratzerbändern, die Entnahme erheblich, da die jeweils angrenzende Fördereinrichtung dabei nicht im Weg ist.

In einer Variante der Erfindung kann die Fördereinrichtung des Materialfördersystems ein Kratzerband sein, bzw. können die Fördereinrichtungen Kratzerbänder sein. Solche Kratzerbänder werden häufig, beispielsweise in Straßenfertigern, zur Förderung von bituminösen Mischgütern eingesetzt. Ihr Einsatz als Fördereinrichtung in Baumaschinen hat sich in jahrelanger Praxis bewährt.

Es ist außerdem denkbar, dass das Materialfördersystem des Weiteren ein Kraftübertragungselement umfasst, das zum Antreiben der Antriebswelle eingerichtet ist. Dabei kann es sich beispielsweise um eine Kette oder aber unterschiedliche Arten von Riemen handeln. Dies kann den Demontageaufwand weiter reduzieren, da sich eine solche Konfiguration in der Regel leichter auseinander nehmen lässt, als wenn die Antriebswelle direkt von einem Motor oder ähnlichem angetrieben wird.

Besonders günstig ist es dabei, wenn die erste Halterung und das Kraftübertragungselement demselben Ende der Antriebswelle zugeordnet sind. Auf diese Weise wird es ermöglicht, dass für den Austausch des Antriebswellenmoduls der Zugriff von einer Seite des Materialfördersystems ausreicht.

Die Erfindung bezieht sich auch auf eine Baumaschine zur Verarbeitung oder zum Transport von Schüttgut, die ein Materialfördersystem der vorstehend beschriebenen Art umfasst.

Bei einer solchen Baumaschine kann es sich um einen Straßenfertiger oder einen Beschicker handeln.

Es ist vorstellbar, dass das Materialfördersystem in der Baumaschine als Querfördersystem oder aber als Längsfördersystem einsetzbar ist.

Im Folgenden wird ein vorteilhaftes Ausführungsbeispiel der Erfindung anhand von Zeichnungen erläutert.
- Figur 1: zeigt eine Baumaschine, in diesem Fall einen Straßenfertiger, in der ein erfindungsgemäßes Materialfördersystem sowie ein erfindungsgemäßes Antriebswellenmodul verbaut sind.
- Figur 2: zeigt eine Fördereinrichtung eines erfindungsgemäßen Materialfördersystems. In diesem Ausführungsbeispiel handelt es sich um ein Kratzerband, das mit Hilfe von einem erfindungsgemäßen Antriebswellenmodul angetrieben wird.
- Figur 3: zeigt eine Schnittansicht eines erfindungsgemäßen Antriebswellenmoduls.

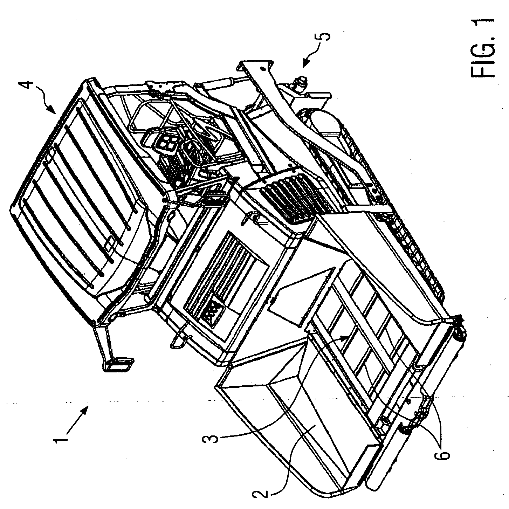

In Figur 1 ist eine Baumaschine 1, in diesem Ausführungsbeispiel ein Straßenfertiger, dargestellt. In Fahrtrichtung vorne ist ein Gutbunker 2 angeordnet, in dem das von der Baumaschine 1 verarbeitete Schüttgut, deponiert werden kann. Im konkreten Ausführungsbeispiel, in dem die Baumaschine 1 ein Straßenfertiger ist, wird es sich in aller Regel um bituminöse Mischgüter, die im Straßenbau verwendet werden, handeln. Es kann sich bei der Erfindung jedoch um jede beliebige Schüttgut transportierende oder verarbeitende Maschine handeln, die beliebige Arten von Schüttgut, wie beispielsweise Sand, Kies oder Splitt, transportieren und/oder verarbeiten kann.

Im konkreten Ausführungsbeispiel wird das zu verarbeitende Schüttgut vom Gutbunker 2 durch ein Materialfördersystem 3 unter einem Fahrerstand 4 hindurch zur Einbaustelle befördert. Dort wird es von einem weiteren Materialfördersystem 5 quer zur Fahrtrichtung verteilt. Man spricht daher auch von einem Querfördersystem. Dabei handelt es sich in diesem Fall um ein System, das Förderschnecken einsetzt. Die folgende Beschreibung eines Ausführungsbeispiels der Erfindung beschränkt sich auf die Ausführung im ersten Materialfördersystem 3. Die Erfindung ist jedoch auf sämtliche Materialfördersysteme 3, 5 der Baumaschine 1 anwendbar.

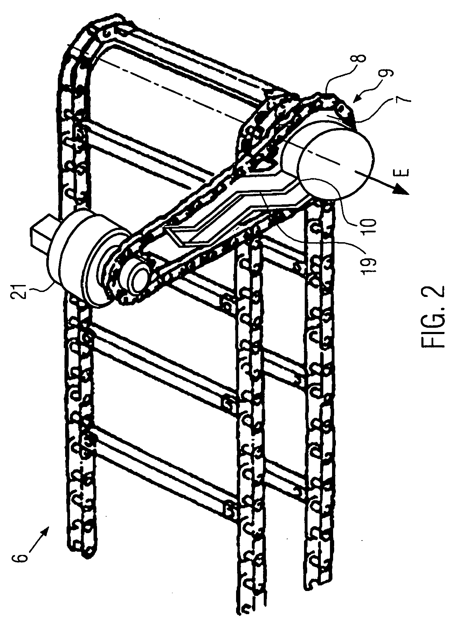

In Figur 2 ist eine Fördereinrichtung 6 des Materialfördersystems 3 dargestellt. Im dargestellten Ausführungsbeispiel ist das Materialfördersystem 3 ein Längsfördersystem. Es werden Kratzerbänder eingesetzt, wie das bei Längsfördersystemen von Straßenfertigern häufig der Fall ist. Denkbar ist jedoch auch, die Erfindung auf andere Fördereinrichtungen, die von Antriebswellen angetrieben werden, anzuwenden. Im beschriebenen Ausführungsbeispiel werden außerdem zwei Fördereinrichtungen 6 eingesetzt, beispielsweise zwei Kratzerbänder parallel nebeneinander. Es ist jedoch auch möglich, lediglich eine oder aber mehr als zwei Fördereinrichtungen 6 vorzusehen. Die Fördereinrichtung 6 wird durch eine Antriebswelle 7 (hier nur teilweise zu erkennen) angetrieben. Die Antriebswelle 7 selbst wird wiederum von einem Kraftübertragungselement 8, im gezeigten Beispiel eine Kette, angetrieben, das seinerseits wiederum durch eine beliebige Art von Motor 21, beispielsweise einen Elektromotor oder aber einen Hydraulikmotor, angetrieben wird. Die Antriebswelle 7 wird an einer ersten Lagerstelle 9 von einer Halterung 10 gelagert. Die Lagerstelle 9 kann dabei die einzige Lagerstelle der Antriebswelle 7 sein. Ebenso gut ist es jedoch auch möglich, weitere Lagerstellen vorzusehen.

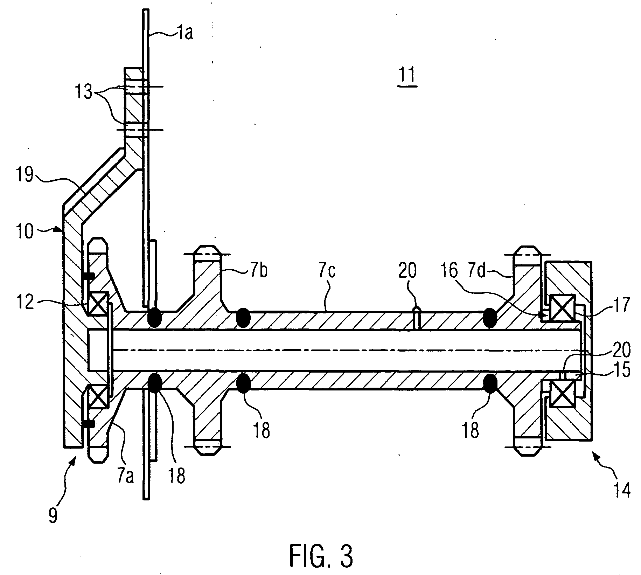

Sowohl die Antriebswelle 7, als auch die Halterung 10 sind Bestandteile eines Antriebswellenmoduls 11, das im Folgenden anhand von Figur 3 näher erläutert wird. Dort ist die Antriebswelle 7 für die Fördereinrichtung 6 dargestellt, die, wie später noch erläutert werden wird, die Segmente 7a, 7b, 7c und 7d umfasst. Sie ist an der ersten Lagerstelle 9 durch die Halterung 10 gelagert. Die Antriebswelle 7 und die Halterung 10 sind dabei über ein erstes Wälzlager 12 derart miteinander verbunden, dass das gesamte Antriebswellenmodul 11 als Ganzes vormontiert in oder an der Baumaschine 1 lösbar befestigbar ist. Dazu können an der Halterung beispielsweise Verschraubungspunkte 13 zur Verschräubung mit einem Chassis 1a der Baumaschine vorgesehen sein. Denkbar ist aber auch jede beliebige andere zerstörungsfrei lösbare Verbindung. Für die Verbindung zwischen Halterung 10 und Antriebswelle 7 sind verschiedene Varianten denkbar. Im in Figur 3 gezeigten Ausführungsbeispiel ist beispielsweise das Wälzlager 12 auf die Halterung 10 aufgeschrumpft und in die Antriebswelle 7 eingeklebt. Ebenso sind jedoch beliebige andere Verbindungsarten, insbesondere Verschraubungen möglich.

Im gezeigten Ausführungsbeispiel ist die Antriebswelle 7 zusätzlich an einer zweiten Lagerstelle 14 gelagert. Hier ist, obwohl das möglich wäre, keine weitere Halterung 10 vorgesehen. Stattdessen verfügt die Antriebswelle 7 an der zweiten Lagerstelle 14 über eine Vorrichtung 15, die für eine Steckverbindung 16 mit einer entsprechenden Einrichtung 17 der Baumaschine 1, beispielsweise ein zweites Wälzlager, konfiguriert ist. Für einen Ausbau oder einen Wechsel des Antriebswellenmoduls 11 muss somit lediglich die Halterung 10 an den Verschraubungspunkten 13 gelöst werden und das Antriebswellenmodul 11 aus der Steckverbindung 16 herausgezogen werden, und zwar senkrecht zu der in die Zeichenebene hinein führenden Förderrichtung der Fördereinrichtung 6.

Die Antriebswelle 7 umfasst wie erwähnt mehrere Segmente 7a, 7b, 7c, 7d, die durch Reibschweißen miteinander verbunden sind. Dies bietet aufgrund der charakteristischen Gefügestruktur an den Schweißnähten 18 eine erhöhte Stabilität. Aufgrund dieser Tatsache sowie dadurch, dass die fertig geschweißte Welle nur noch ein einzelnes Teil darstellt, ist es möglich, das Antriebswellenmodul 11 so auszuführen wie oben beschrieben. Im gezeigten Ausführungsbeispiel handelt es sich bei den Segmenten 7a, 7b und 7d um Zahnradsegemente, bei Segment 7c um ein Rohr. Es sind jedoch beliebige Arten von Segmenten in beliebiger Abfolge und Kombination möglich. So kann Segment 7a z. B. ein Polygonelement sein und etwa 7b eine Keilwellenverzahnung oder aber eine beliebige Art von Gewinde. Ebenso können beliebig viele, beliebig lange Rohrsegmente 7c vorgesehen sein, um den axialen Abstand zwischen den übrigen Segmenten dem Einsatzzweck entsprechend anzupassen. Zusätzlich können die Segmente (7a, 7b, 7c, 7d) aus unterschiedlichen Werkstoffen gefertigt sein. Diese können auf die Funktion des jeweiligen Segments hin optimiert sein und sich hinsichtlich Härte, Oberflächenhärte, Dichte, Gewicht, Kosten oder aber Korrosions- und Oxidationsneigung unterscheiden.

Die Halterung 10 umfasst einen Lagerarm 19. Dadurch wird es möglich, die Verschraubungspunkte 13 von der Achse der Antriebswelle 7 beabstandet anzuordnen. Dies kann die Montage vereinfachen. Der Lagerarm 19 kann eine Kröpfung aufweisen, sodass die Verschraubungspunkte 13 und die Lagerstelle 9 auch in axialer Richtung der Antriebswelle 7 beabstandet vorgesehen werden können. Auch dies kann bei beengten Platzverhältnissen die Montage vereinfachen.

Die Antriebswelle 7 kann als Hohlwelle ausgeführt sein. Dies erleichtert den Reibschweißvorgang. Außerdem wird die Anordnung einer Schmiereinrichtung 20 innerhalb der Antriebswelle 7 ermöglicht. Dabei kann es sich zum Beispiel um einen Schmiernippel oder aber ein System aus Schmiermittelleitungen handeln. Bei Verwendung eines flüssigen Schmiermittels kann gleichzeitig das Ausspülen von Abrasionsprodukten vorgesehen werden. Es ist jedoch auch möglich, die Antriebswelle 7 mit pastösem Schmiermittel vollständig zu füllen.

Das Materialfördersystem 3 kann so eingerichtet sein, dass das Antriebswellenmodul 11 in einer Entnahmerichtung E, die im Ausführungsbeispiel orthogonal zur Förderrichtung der Fördereinrichtung 6 verläuft, entnommen werden kann. Dies ist insbesondere bei dem beschriebenen Ausführungsbeispiel eines Kratzerbandes 6 vorteilhaft. Alternativ kann die Entnahmerichtung E jedoch auch in einem beliebeigen Winkel zur Förderrichtung der Fördereinrichtung 6 verlaufen.

Bei mehreren nebeneinander angeordneten Fördereinrichtungen 6, beispielsweise zwei Kratzerbändern 6, kann es darüber hinaus vorteilhaft sein, wenn die Entnahmerichtung E des Antriebswellenmoduls 11 einer Fördereinrichtung 6 in eine von einer anderen Fördereinrichtung 6 abgewandte Richtung weist.

Es können für jede Fördereinrichtung 6 ein oder mehrere Antriebswellenmodule 11 vorgesehen sein. Ebenso können für jedes Materialfördersystem 3 ein oder mehrere Antriebswellenmodule 11 vorgesehen sein. Im konkreten Ausführungsbeispiel wurde das Antriebswellenmodul 11 lediglich im Zusammenhang mit Materialfördersystemen beschrieben. Es ist jedoch auch möglich ein entsprechendes erfindungsgemäßes Antriebswellenmodul 11 zum Antreiben jeder beliebigen anderen Komponente der Baumaschine 1 vorzusehen. Hieraus würden sich die gleichen Vorteile hinsichtlich Montage, Wartung und Austausch ergeben.

## Patentansprüche

1. Antriebswellenmodul (11) für ein Materialfördersystem (3) einer Baumaschine (1), umfassend:
eine Antriebswelle (7),
**dadurch gekennzeichnet, dass** nur eine Halterung (10) mit einem Lagerarm (19) dazu eingerichtet ist, die Antriebswelle (7) an einer ersten Lagerstelle (9) zu lagern, und dass die Antriebswelle (7) verschiedene Segmente (7a, 7b, 7c, 7d) umfasst, die durch Reibschweißen zusammengefügt sind, und dass die Halterung (10) derart mit der Antriebswelle (7) verbunden ist, dass das gesamte Antriebswellenmodul (11), das die Antriebswelle (7) sowie die Halterung (10) aufweist, als Ganzes vormontiert in oder an der Baumaschine (1) lösbar befestigbar ist.

2. Antriebswellenmodul nach einem der vorangehenden Ansprüche, **dadurch gekennzeichnet, dass** das Antriebswellenmodul (11) zusätzlich zu der Halterung (10) eine Vorrichtung (15) umfasst, die für eine Steckverbindung (16) des Antriebswellenmoduls (11) mit einer entsprechenden Einrichtung (17) der Baumaschine (1) konfiguriert ist.

3. Antriebswellenmodul nach einem der vorangehenden Ansprüche, **dadurch gekennzeichnet, dass** die Antriebswelle (7) als Hohlwelle ausgeführt ist.

4. Antriebswellenmodul nach Anspruch 3, **dadurch gekennzeichnet, dass** innerhalb der als Hohlwelle ausgeführten Antriebswelle (7) eine Schmiereinrichtung (20) vorgesehen ist.

5. Materialfördersystem (3) für eine Schüttgut verarbeitende oder transportierende Baumaschine (1), wobei das Materialfördersystem (3) umfasst:
eine Fördereinrichtung (6) oder mehrere Fördereinrichtungen (6), die zur Förderung des Schüttguts konfiguriert ist/sind,
und ein Antriebswellenmodul (11) oder mehrere Antriebswellenmodule (11) nach einem der vorangehenden Ansprüche, das/die zum Antreiben der Fördereinrichtung (6) oder der Fördereinrichtungen (6) konfiguriert ist/sind.

6. Materialfördersystem nach Anspruch 5, **dadurch gekennzeichnet, dass** das Antriebswellenmodul (11) oder die Antriebswellenmodule (11) orthogonal zur Förderrichtung der jeweiligen Fördereinrichtung (11) entnehmbar ist/sind.

7. Materialfördersystem nach Anspruch 5 oder 6, **dadurch gekennzeichnet, dass** mehrere Fördereinrichtungen (6) vorgesehen sind und die Antriebswellenmodule (11) jeweils in einer Entnahmerichtung (E) entnehmbar sind, wobei die Entnahmerichtung (E) des Antriebswellenmoduls (11) einer Fördereinrichtung (6) jeweils in eine einer anderen Fördereinrichtung (6) abgewandte Richtung weist.

8. Materialfördersystem nach einem der Ansprüche 5 bis 7, **dadurch gekennzeichnet, dass** die Fördereinrichtung (6) ein Kratzerband ist oder die Fördereinrichtungen (6) Kratzerbänder sind.

9. Materialfördersystem nach einem der Ansprüche 6 bis 8, **dadurch gekennzeichnet, dass** das Materialfördersystem (3) des Weiteren ein Kraftübertragungselement (8) umfasst, das zum Antreiben der Antriebswelle (7) eingerichtet ist.

10. Materialfördersystem nach Anspruch 9, **dadurch gekennzeichnet, dass** die erste Halterung (10) und das Kraftübertragungselement (8) demselben Ende der Antriebswelle (7) zugeordnet sind.

11. Baumaschine (1) zur Verarbeitung oder zum Transport von Schüttgut, **dadurch gekennzeichnet, dass** die Baumaschine (1) ein Materialfördersystem (3) nach einem der Ansprüche 5 bis 10 umfasst.

12. Baumaschine nach Anspruch 11, **dadurch gekennzeichnet, dass** die Baumaschine (1) ein Straßenfertiger oder ein Beschicker ist.

13. Baumaschine nach Anspruch 11 oder 12, **dadurch gekennzeichnet, dass** das Materialfördersystem (3, 5) als Querfördersystem (5) oder als Längsfördersystem (3) einsetzbar ist.

## Claims

1. Drive shaft module (11) for a material conveyor system (3) of a construction machine (1), comprising:
a drive shaft (7),
**characterized in that** only one mounting (10) having a bearing arm (19) is adapted to support the drive shaft (7) at a first bearing location (9),and that the drive shaft (7) comprises different segments (7a, 7b, 7c, 7d) which are joined by friction welding, and that the mounting (10) is connected to the drive shaft (7) such that the entire drive shaft module (11), comprising the drive shaft (7) and the mounting (10), may be detachably fixed, in a preassembled state, in or at the construction machine (1).

2. Drive shaft module according to one of the preceding claims, **characterized in that** the drive shaft module (11) comprises, in addition to the mounting (10), a device (15) which is configured for a pluggable connection (16) of the drive shaft module (11) with a corresponding disposition (17) of the construction machine (1).

3. Drive shaft module according to one of the preceding claims, **characterized in that** the drive shaft (7) is embodied as a hollow shaft.

4. Drive shaft module according to claim 3, **characterized in that** a lubrication device (20) is provided within the drive shaft (7) embodied as a hollow shaft.

5. Material conveyor system (3) for a construction machine (1) that processes or transports bulk material (1), the material conveyor system (3) comprising:
a conveyor (6) or several conveyors (6) which is/are configured to convey the bulk material,
and a drive shaft module (11) or several drive shaft modules (11) according to one of the preceding claims which is/are configured to drive the conveyor (6) or the conveyors (6).

6. Material conveyor system according to claim 5, **characterized in that** the drive shaft module (11) or the drive shaft modules (11) is removable orthogonally to the conveying direction of the respective conveying device (11).

7. Material conveyor system according to claim 5 or 6, **characterized in that** several conveyors (6) are provided and the drive shaft modules (11) are each removable in a removing direction (E), the removing direction (E) of the drive shaft module (11) of one conveyor (6) pointing in a direction facing away from another conveyor (6).

8. Material conveyor system according to one of claims 5 to 7, **characterized in that** the conveyor (6) is a scraper belt, or the conveyors (6) are scraper belts.

9. Material conveyor system according to one of claims 6 to 8, **characterized in that** the material conveyor system (3) furthermore comprises a power transmission element (8) designed to drive the drive shaft (7).

10. Material conveyor system according to claim 9, **characterized in that** the first mounting (10) and the power transmission element (8) are associated with the same end of the drive shaft (7).

11. Construction machine (1) for processing or transporting bulk material, **characterized in that** the construction machine (1) comprises a material conveyor system (3) according to one of claims 5 to 10.

12. Construction machine according to claim 11, **characterized in that** the construction machine (1) is a road finishing machine or a feeder.

13. Construction machine according to claim 11 or 12, **characterized in that** the material conveyor system (3, 5) may be employed as transverse conveyor system (5) or as longitudinal conveyor system (3).

## Revendications

1. Module d'arbre d'entraînement (11) pour un système de transport ou de convoyage de matériau (3) d'un engin de travaux publics (1), comprenant :
un arbre d'entraînement (7),
**caractérisé en ce que** seulement un support (10) avec un bras de palier de support (19) est conçu pour assurer le montage sur palier de l'arbre d'entraînement (7) au niveau d'une première zone de palier (9), et **en ce que** l'arbre d'entraînement (7) comprend différents segments (7a, 7b, 7c), qui sont assemblés par soudage par friction, et **en ce que** le support (10) est relié à l'arbre d'entraînement (7) de telle façon que la totalité du module d'arbre d'entraînement (11), qui comprend l'arbre d'entraînement (7) et le support (10), puisse être fixé de manière démontable, en tant qu'entité pré-montée, dans ou sur l'engin de travaux publics (1).

2. Module d'arbre d'entraînement selon l'une des revendications précédentes, **caractérisé en ce que** le module d'arbre d'entraînement (11) comprend, en plus du support (10), un dispositif (15) qui est configuré pour assurer une liaison par enfichage (16) du module d'arbre d'entraînement (11) avec un dispositif (17) correspondant de l'engin de travaux publics (1).

3. Module d'arbre d'entraînement selon l'une des revendications précédentes, **caractérisé en ce que** l'arbre d'entraînement (7) est réalisé sous forme d'arbre creux.

4. Module d'arbre d'entraînement selon la revendication 3, **caractérisé en ce qu'**à l'intérieur de l'arbre d'entraînement (7) réalisé sous forme d'arbre creux, il est prévu un dispositif de graissage ou de lubrification (20).

5. Système de transport ou de convoyage de matériau (3) pour un engin de travaux publics (1) assurant le traitement ou le transport de matériau en vrac, le système de transport de matériau (3) comprenant :
un dispositif de transport (6) ou plusieurs dispositifs de transport (6), qui est/sont configuré(s) pour le transport du matériau en vrac,
et un module d'arbre d'entraînement (11) ou plusieurs modules d'arbre d'entraînement (11) selon l'une des revendications précédentes, qui est/sont configuré(s) pour entraîner le dispositif de transport (6) ou les dispositifs de transport (6).

6. Système de transport de matériau selon la revendication 5, **caractérisé en ce que** le module d'arbre d'entraînement (11) ou les modules d'arbre d'entraînement (11) peut/peuvent être retirés orthogonalement à la direction de transport du dispositif de transport (11) respectif.

7. Système de transport de matériau selon la revendication 5 ou la revendication 6, **caractérisé en ce que** sont prévus plusieurs dispositifs de transport (6) et les modules d'arbre d'entraînement (11) peuvent être retirés respectivement dans une direction de retrait (E), la direction de retrait (E) du module d'arbre d'entraînement (11) d'un dispositif de transport (6) étant respectivement orientée à l'opposé de celle d'un autre dispositif de transport (6).

8. Système de transport de matériau selon l'une des revendications 5 à 7, **caractérisé en ce que** le dispositif de transport (6) est une bande ou un convoyeur à racleurs ou les dispositifs de transport (6) sont des bandes ou convoyeurs à racleurs.

9. Système de transport de matériau selon l'une des revendications 6 à 8, **caractérisé en ce que** le système de transport de matériau (3) comprend, par ailleurs, un élément de transmission de force (8), qui est conçu pour entraîner l'arbre d'entraînement (7).

10. Système de transport de matériau selon la revendication 9, **caractérisé en ce que** le premier support (10) et l'élément de transmission de force (8) sont associés à la même extrémité de l'arbre d'entraînement (7).

11. Engin de travaux publics (1) pour assurer le traitement ou le transport de matériau en vrac, **caractérisé en ce que** l'engin de travaux publics (1) comporte un système de transport de matériau (3) selon l'une des revendications 5 à 10.

12. Engin de travaux publics selon la revendication 11, **caractérisé en ce que** l'engin de travaux publics (1) est un finisseur de route ou un alimentateur.

13. Engin de travaux publics selon la revendication 11 ou la revendication 12, **caractérisé en ce que** le système de transport de matériau (3, 5) peut être mis en oeuvre en tant que système de transport transversal (5) ou système de transport longitudinal (3).
